# EUROPEAN PATENT APPLICATION

(11) **EP 3 950 806 A1**
(43) Date of publication of application: **09.02.2022**
(21) Application number: 20784426.7
(22) Date of filing: 25.03.2020
(51) Int. Cl.: C08K 5/134, C08K 5/524, C08L 23/06, C08L 27/12

(54) **RESIN COMPOSITION, MOLDED BODY USING SAID RESIN COMPOSITION, AND FILM STRUCTURE, BUILDING STRUCTURE AND ADHESIVE MOLDED BODY EACH USING SAID RESIN COMPOSITION OR SAID MOLDED BODY**

(30) Priority: 29.03.2019 JP 2019067611
(71) Applicant: Denka Company Limited, Tokyo 103-8338 (JP)
(72) Inventor: YASUMOTO, Noriaki, Tokyo 103-8338 (JP); NAKANO, Shunsuke, Tokyo 103-8338 (JP); OISHI, Masayuki, Tokyo 103-8338 (JP)
(74) Representative: Zacco Sweden AB
(86) International application number: PCT/JP2020/013252
(87) International publication number: WO 2020/203528

(57) **Abstract**

A resin composition containing an ethylene-chlorotrifluoroethylene copolymer (A) and a phosphite antioxidant (B) having no phenolic hydroxy group in the molecule, and a molded product from the resin composition, and a membrane structure, a construction and an adhesive molded product made by using them.

## Description

### Technical Field

The present invention relates to a resin composition, a molded product from the resin composition, and a membrane structure, a construction, and an adhesive molded product made by using them. More specifically, the present invention relates to an ethylene-chlorotrifluoroethylene copolymer resin composition, a molded product from the resin composition, a membrane structure, a construction, and an adhesive molded product made by using them.

### Background Art

Since ethylene-chlorotrifluoroethylene copolymers (hereinafter, may be referred to as "ECTFEs") are excellent in weather resistance, chemical resistance, contamination resistance, water repellency, insulation, low friction, and electrical insulation, as well as in low hygroscopicity, water vapor barrier property, low chemical permeability, flame retardancy, flame spread resistance, etc., they are used for structural members of semiconductor manufacturing apparatuses, various corrosion resistant linings, etc. Moreover, as ECTFE can be molded into a film, it is widely used in various applications such as surface protective films, member films for solar cells, release films, and films for membrane structures.

Further, ECTFE is often used as a material for sheets, etc., which is used to cover an object. Therefore, it requires excellent transparency to visually recognize the object through the sheet. ECTFE has a problem that acid gas is likely to be generated under elevated temperature conditions when it is extruded into a sheet form or the like, and various stabilizers such as antioxidants have been added (for example, see Patent Literatures 1 to 7 below).

### Citation List

### Patent Literature

Patent Literature 1: Japanese Patent Laid-Open No. 2001-270969
Patent Literature 2: Japanese Translation of PCT International Application Publication No. 2013-543027
Patent Literature 3: Japanese Patent Laid-Open No. 10-77318
Patent Literature 4: Japanese Patent Laid-Open No. 60-188447
Patent Literature 5: U.S. Patent No. 5051460
Patent Literature 6: U.S. Patent No. 4775709
Patent Literature 7: U.S. Patent No. 4539354

### Summary of Invention

### Technical Problem

However, when a molded product such as a sheet from ECTFE is used outdoors, it has a problem that the antioxidant contained in the molded product deteriorates and yellows over time due to exposure to sunlight and ultraviolet rays, and the transparency and appearance of the sheet are impaired. Also, there is a problem that the sheet becomes cloudy in the same environment when the antioxidant is not added or depending on the type of the antioxidant.

In order to solve the aforementioned problems, one of the objects of the present invention is to provide a resin composition that can maintain excellent transparency and is less likely to cause white turbidity and yellowing even when exposed to sunlight and ultraviolet rays, a molded product from the resin composition, and a membrane structure, a construction, and an adhesive molded product made by using them.

### Solution to Problem

The present inventors have fond, as a result of diligent experimentation to achieve the above problems, that the aforementioned problems can be solved when using an ethylene-chlorotrifluoroethylene copolymer resin composition containing a phosphite antioxidant having no phenol group in the molecule, i.e., no phenolic hydroxy group, and thus have completed the present invention exemplified below. It is conjectured that as a particularly preferable aspect, not having a phenol group in the molecule of the phosphite antioxidant in the resin composition of the present invention, differs in the conventional resin composition of the same type, which is a major factor for solving the problems according to the present invention.

<1> A resin composition comprising an ethylene-chlorotrifluoroethylene copolymer (A) and a phosphite antioxidant (B) having no phenolic hydroxy group in the molecule.
<2> The resin composition according to <1>, wherein the phosphite antioxidant (B) is at least one type selected from tris(2,4-di-tert-butylphenyl)phosphite, 3,9-bis(octadecyloxy)-2,4,8,10-tetraoxa-3,9-diphosphaspiro[5,5]undecane, 2,4,8,10-tetrakis(1,1-dimethylethyl)-6-[(2-ethylhexyl)oxy]-12H-dibenzo[d,g][1,3,2]dioxaphosphocin.
<3> The resin composition according to <1> or <2>, further comprising another phosphite antioxidant (B') having a phenolic hydroxy group in the molecule, wherein a content of the phosphite antioxidant (B) is 60 parts by mass or more with respect to 100 parts by mass of a total amount of the phosphite antioxidants in the composition.
<4> The resin composition according to any one of <1> to <3>, further comprising a phenolic antioxidant (C) having one or three or more structures represented by the following formula (1) in the molecule, 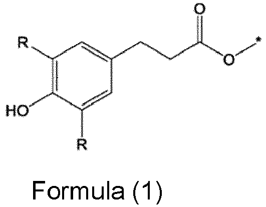 wherein R represents a hydrogen atom or an alkyl group having 1 to 4 carbon atoms, and ∗ represents a bonding site.
<5> The resin composition according to <4>, wherein the phenolic antioxidant (C) is at least one type selected from pentaerythritol tetrakis[3-(3,5-di-tert-butyl-4-hydroxyphenyl)propionate], stearyl 3-(3,5-di-tert-butyl-4-hydroxyphenyl) propionate, and 1,6-hexanediol bis[3-(3,5-di-tert-butyl-4-hydroxyphenyl)propionate].
<6> The resin composition according to any one of <1> to <5>, wherein a content of the phosphite antioxidant (B) is 25 to 100 parts by mass with respect to 100 parts by mass of a total amount of a phosphite antioxidant in the composition.
<7> A molded product obtained by molding the resin composition according to any one of <1> to <6>.
<8> The molded product according to <7>, being in a form of a sheet or a film.
<9> The molded product according to <7> or <8>, wherein secondary processing is applied to the molded product.
<10> A membrane structure made by using the molded product according to any one of <7> to <9>.
<11> A construction made by using the molded product according to any one of <7> to <9>.
<12> An adhesive molded product made by using the molded product according to any one of <7> to <9> as a base material.

### Advantageous Effects of Invention

According to the present invention, a resin composition that can maintain excellent transparency and is less likely to cause white turbidity and yellowing even when exposed to sunlight and ultraviolet rays, a molded product from the resin composition, and a membrane structure, a construction and an adhesive molded product made by using them can be provided.

### Description of Embodiments

The present invention will be described in detail below, however, the present invention is not limited to each of the following embodiments.

### <ECTFE resin composition>

The resin composition of the present embodiment contains an ethylene-chlorotrifluoroethylene copolymer (A) and a phosphite antioxidant (B) having no phenolic hydroxy group in the molecule. Hereinafter, the resin composition containing ECTFE may be referred to as "ECTFE resin composition".

The reason why the resin composition of the present embodiment can exhibit the inhibition effect on white turbidity (whitening) and yellowing as described above, is not clear. However, as can be seen from the comparison between Examples and Comparative Examples described below, when the ECTFE resin composition prepared by using various phosphite antioxidants was evaluated, the experimental results have been obtained that even if the ECTFE resin composition prepared by using a phosphite antioxidant having no phenolic group in the molecule is exposed to ultraviolet rays, excellent transparency can be maintained, and white turbidity and yellowing are unlikely to occur. From this result, it is conjectured that when a phenolic hydroxy group (phenol group) is contained in the molecule of the phosphite antioxidant, hydrolysis of phosphite produces phenolic substances with small molecular weights that are then excited by ultraviolet rays to form dimers, which produces the causative substance of yellowing. Further, it is conjectured that when an antioxidant is not added to the ECTFE resin composition, the decomposition of the resin is promoted by sunlight, ultraviolet rays, etc., and the decomposed product foams inside the resin composition, resulting in white turbidity. When using the resin composition of the present embodiment, it is possible to inhibit the occurrence of white turbidity and yellowing that is contradictory phenomena, in terms of the addition of the antioxidant. In particular, when the resin composition of the present embodiment is used, the inhibition effect on the occurrence of white turbidity can be exhibited for a long period of time.

[Ethylene-chlorotrifluoroethylene copolymer (A)] Ethylene-chlorotrifluoroethylene copolymer (A) (ECTFE) is a copolymer of ethylene (hereinafter, may be referred to as "Et") and chlorotrifluoroethylene (also known as "ethylene trifluorochloride", and hereinafter, may be referred to as "CTFE") .

In the present embodiment, ECTFE is not limited to a copolymer composed only of the Et monomer and the CTFE monomer. ECTFE in the present embodiment also includes, in addition to the copolymer of Et monomer and CTFE monomer, for example, copolymers by using (perfluorohexyl)ethylene, (perfluorobutyl)ethylene, (perfluorooctyl)ethylene, and [4-(heptafluoroisopropyl)perfluorobutyl] ethylene, etc., as the third monomers.

The composition ratio (molar ratio) of each structural unit in the copolymerization of Et and CTFE can be measured by a method such as 19F-NMR or FT-IR. The ratio of Et to CTFE in ECTFE (Et/CTFE ratio) is not particularly limited, but is preferably 30/70 to 70/30 and more preferably 40/60 to 60/40. When the Et monomer ratio is 70 or less, the monomer ratio of CTFE does not relatively decrease too much, therefore the transparency, weather resistance, antifouling property, etc., which are the characteristics of the fluororesin, can be prevented from being impaired. Moreover, when the CTFE monomer ratio is 70 or less, the amount of acid gas generated upon elevated-temperature use can be prevented from becoming too high.

As ECTFE used in the present embodiment, ECTFE having an arbitrary Et/CTFE ratio may be used alone, or ECTFE used in the present embodiment may be mixed with two or more ECTFEs having different Et/CTFE ratios and used.

In the present embodiment, the content of ECTFE in the resin composition is not particularly limited, but is preferably 70 to 99.9% by mass, more preferably 80 to 99.9% by mass, and particularly preferably 90 to 99.9% by mass, from the viewpoint of maintaining transparency.

Further, a resin other than ECTFE may be added as necessary, provided that the transparency of the ECTFE resin composition of the present embodiment is not impaired. The resin other than ECTFE includes, for example, terpolymers of ethylene, chlorotrifluoroethylene and other third monomers, polychlorotrifluoroethylene (PCTFE), ethylene-tetrafluoroethylene copolymer (ETFE), and polyvinyl fluoride (PVF), polyvinylidene fluoride (PVDF), vinylidene fluoride-hexafluoropropylene copolymer, polytetrafluoroethylene (PTFE), polyhexafluoropropylene (HFP), polyperfluoroalkyl vinyl ether (PFA), a terpolymer of tetrafluoroethylene, vinylidene fluoride and hexafluoropropylene, etc.

### [Antioxidant]

### (Phosphite antioxidant (B) having no phenolic hydroxy group in the molecule)

The ECTFE resin composition of the present embodiment contains at least phosphite antioxidant (B) having no phenolic hydroxy group in the molecule. Here, the "phosphite antioxidant" refers to an antioxidant having a phosphite ester structure in the molecule.

Phosphite antioxidant (B) is not particularly limited, but in particular, tris(2,4-di-tert-butylphenyl)phosphite, 3,9-bis(octadecyloxy)-2,4,8,10-tetraoxa-3,9-diphosphaspiro[5,5] undecane, 2,4,8,10-tetrakis(1,1-dimethylethyl)-6-[(2-ethylhexyl)oxy]-12H-dibenzo[d,g][1,3,2]dioxaphosphocin, etc., are preferred.

One type of phosphite antioxidant (B) may be used alone, or two or more types may be used in combination.

By adding these phosphite antioxidants (B) to ECTFE, it is possible to achieve both high heat resistance and compatibility with ECTFE, in addition to the inhibition effect on whitening and yellowing against sunlight, etc.

Moreover, the phosphite antioxidant used in the present embodiment has a melting point of preferably 50°C or higher and more preferably 100°C or higher. When the melting point is 100°C or higher, it is possible to avoid the risk of the phosphite antioxidant bleeding out to the sheet surface upon film formation and the risk of coloring due to the decomposition of the phosphite antioxidant.

Further, as described later, when other antioxidants such as phenolic antioxidants are used, if the phenolic antioxidants and other antioxidants serve as antioxidants and become oxides, they may cause coloring due to the oxides. In such a case, the phosphite antioxidant (B) reduces the oxides to prevent the resin composition or the cured product thereof from being colored. Therefore, although not particularly limited, when other antioxidants such as the phenolic antioxidant is used, the content of phosphite antioxidant (B) is preferably 25 to 100 parts by mass, more preferably 50 to 100 parts by mass, and particularly preferably 75 to 100 parts by mass, based on 100 parts by mass of the total amount of the antioxidant in the composition, from the viewpoint of the reducing effect (anticoloration) of phosphite antioxidant (B) on the other antioxidants.

The resin composition of the present embodiment may contain another phosphite antioxidant (B') having a phenolic hydroxy group in the molecule as another antioxidant in addition to phosphite antioxidant (B). However, from the viewpoint of sufficiently exhibiting the inhibition effect on whitening and yellowing against sunlight, etc., the content of phosphite antioxidant (B) is preferably 60 parts by mass or more, more preferably 80 parts by mass or more, and particularly preferably 100 parts by mass with respect to 100 parts by mass of the total amount of the phosphite antioxidants in the composition (i.e., the total amount of phosphite antioxidants (B) and (B')).

A method for adding the antioxidant in the present embodiment to the resin composition may be a method for preliminarily adding the antioxidant in the granulation step of the ECTFE starting material, or a method for adding the antioxidant while melt-mixing it with the ECTFE starting material that was not added in the step of producing the sheet of the ECTFE resin composition.

The content of phosphite antioxidant (B) in the resin composition is not particularly limited in this embodiment, but is preferably 0.01 to 1.0% by mass and more preferably 0.01 to 0.5% by mass. When the content is 1.0% by mass or less, it is possible to prevent the transparency of the ECTFE resin composition from being excessively lowered. Moreover, when the content is 0.01% by mass or more, the acid gas reducing effect can be sufficiently obtained.

### (Phenolic antioxidant)

The resin composition of the present embodiment can further contain a phenolic antioxidant in addition to the phosphite antioxidant. Since the phosphite antioxidant and the phenolic antioxidant have different antioxidant mechanisms for the resin, combination thereof for use is more preferred from the viewpoint of reducing the amount of acid gas generated. Here, the phenolic antioxidant refers to an antioxidant having a phenol structure (C₆H₅OH). However, in the present embodiment, an antioxidant including both a phenol structure and a phosphite structure is regarded as a phosphite antioxidant.

The phenolic antioxidant is not particularly limited, but phenolic antioxidant (C) having one or three or more structures represented by the following chemical formula (1) in the molecule: 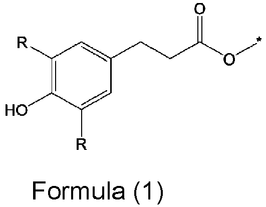 wherein R represents a hydrogen atom or an alkyl group having 1 to 4 carbon atoms, and ∗ represents a bonding site, is preferred, and the phenolic antioxidant having three or more structures represented by chemical formula (1) is more preferred.

In formula (1), R represents a hydrogen atom or an alkyl group having 1 to 4 carbon atoms. The alkyl group having 1 to 4 carbon atoms includes, for example, a methyl group, an ethyl group, an n-propyl group, an i-propyl group, an n-butyl group, an i-butyl group and a t-butyl group, and the methyl group and t-butyl group are preferred. In addition, the two Rs may be the same as each other or may be different from each other.

From the viewpoint of inhibiting yellowing, the following structures (A) to (D) are preferable, and structure (D) is particularly preferable as structural examples represented by formula (1).
(A) The structure represented by formula (1) wherein one R is a methyl group, and the other R is a hydrogen or another alkyl group.
(B) The structure represented by formula (1) wherein one R is a t-butyl group, and the other R is a hydrogen or another alkyl group.
(C) The structure represented by formula (1) wherein both Rs are methyl groups.
(D) The structure represented by formula (1) wherein both Rs are t-butyl groups.

Structure (D) is a hindered type in which two tert-butyl groups are present in the vicinity of the phenol group, and dimerization causing yellowing is considered to be unlikely to occur. When there is only one structure represented by formula (1), the molecule is relatively small and can be uniformly dispersed in the resin. Moreover, although not necessarily clear, a phenolic antioxidant having three or more structures represented by formula (1) can be assumed to efficiently capture decomposition products such as radicals that cause the resin decomposition.

Phenolic antioxidant (C) includes, for example, a hindered or semi-hindered antioxidant. Among them, phenolic antioxidants (C) including pentaerythritol tetrakis[3-(3,5-di-tert-butyl-4-hydroxyphenyl)propionate], stearyl 3-(3,5-di-tert-butyl-4-hydroxyphenyl) propionate, 1,6-hexanediol bis[3-(3,5-di-tert-butyl-4-hydroxyphenyl)propionate], etc., are preferable.

It should be noted that one type of phenolic antioxidant may be used alone, or two or more types may be used in combination.

When using pentaerythritol tetrakis[3-(3,5-di-tert-butyl-4-hydroxyphenyl)propionate] as phenolic antioxidant (C), it reduces the amount of acid gas generated, and transparency, heat resistance of the antioxidant, weather resistance, and resistance to yellowing, are excellent.

Moreover, when using stearyl 3-(3,5-di-tert-butyl-4-hydroxyphenyl) propionate as phenolic antioxidant (C), the resistance to yellowing becomes excellent and both of the reducing effect on the amount of acid gas generated and the high transparency can be achieved.

The phenolic antioxidant used in this embodiment has a melting point of preferably 100°C or higher and more preferably 150°C. When the melting point is 100°C or higher, it is possible to avoid the risk of the phenolic antioxidant bleeding out on the sheet surface upon film formation and the risk of coloring due to decomposition of the phenolic antioxidant.

The method for adding the phenolic antioxidant to the resin composition may be a method for preliminarily adding it in the granulation step of the ECTFE starting material, or a method for adding it while melt-mixing with the unadded ECTFE starting material in the step of producing the sheet of the resin composition.

The content of phenolic antioxidant (C) in the resin composition of the present embodiment is not particularly limited in this embodiment, but is preferably 0.01 to 1.0% by mass and more preferably 0.01 to 0.5% by mass. The content of 1.0% by mass or less can inhibit yellowing of the resin composition of the present embodiment and prevent the transparency from being excessively lowered. Moreover, when the content is 0.01% by mass or more, the acid gas reducing effect can be sufficiently obtained.

### [Other additives]

The resin composition of the present embodiment may further contain a known heat stabilizer, auxiliary stabilizer, etc., if necessary. The heat stabilizer includes organic sulfur antioxidants, amine antioxidants, hydroxyamines, organotin compounds, and β-diketones.

A single heat stabilizer may be used alone, or two or more may be used in combination.

The method for adding the heat stabilizer, the auxiliary stabilizer, etc., to the resin composition of the present embodiment, may be a method for preliminarily adding them in the granulation step of the ECTFE starting material, or a method for adding them while melt-mixing with the unadded ECTFE starting material in a step of producing a sheet of the resin composition of the present embodiment.

The contents of the heat stabilizer and the auxiliary stabilizer in the resin composition are not particularly limited, but the amount in total can be 0.01 to 1.0% by mass. When it is 1.0% by mass or less, it is possible to prevent the transparency of the ECTFE resin composition from being excessively lowered. When it is 0.01% by mass or more, a sufficient acid gas reducing effect can be obtained.

Provided that the transparency, color tone, glossiness, heat resistance, weather resistance, resistance to yellowing, sheet appearance, etc., are not practicably impaired, plasticizers, lubricants, ultraviolet absorbers, acid acceptors, antistatic agents, antifog additives, antistick agents, hydrophilic agents, liquid repellents, etc., can be further added to the resin composition of the present embodiment. The addition method may be a method for adding them when the resin composition is kneaded, or a method for applying them to the sheet surface after producing a sheet from the resin composition of the present embodiment.

Further, to the resin composition of the present embodiment, a pigment can be added as necessary within a range that does not impair the resistance to yellowing and transparency. Suitable pigments include, for example, metal oxides such as titanium oxide and zinc oxide, metal carbonates such as calcium carbonate, silica, carbon black, acetylene black, chrome yellow, phthalocyanine blue, phthalocyanine green, etc., although, they are not limited.

### <Production method of pellet type resin composition>

The resin composition of the present embodiment can be fabricated by various methods. Here, the method for producing a pellet type resin composition will be described.

As the method for producing the pellet type resin composition, a known method can be employed, and examples thereof include a method for producing it by a melt-kneading method using an extruder, etc. The ECTFE resin and the antioxidant each is premixed in an unmolten state, then melted in an extruder and uniformly mixed. Subsequently, the mixture is extruded into a strand shape, the kneaded product is cooled, and then pelletized with a pelletizer to obtain a pellet type ECTFE resin composition. As the extruder, a single screw type, a twin screw type, a tandem type, etc., can be generally used, but the twin screw type extruder is preferable from the viewpoint of uniform dispersion of the ECTFE resin and the antioxidant.

### <Molded product>

The resin composition of the present embodiment can be formed into various shapes to form a molded product. For example, the molded product from the resin of the present embodiment can have various shapes such as a sheet shape or a film shape depending on the purpose. Moreover, secondary processing can be applied to the molded product of the present embodiment, according to the purpose. The secondary processing will be described below.

Hereinafter, the molded product of the present embodiment and the production method thereof will be described by adopting a sheet-shaped molded product (hereinafter, may be simply referred to as "sheet") as an example.

As the method for producing a sheet, a known method can be used, and examples thereof include a method of forming it by a melt-extrusion method using an extruder and various T dies such as a feed block die or a multi-manifold die, etc. As the extruder, a single screw type, a twin screw type, a tandem type, etc., can be generally used, but a single screw type extruder is preferable in terms of preventing the resin from staying in the extruder system. Moreover, a plurality of extruders may be used to co-extrude the resin composition of the present embodiment and another ECTFE resin composition containing the additive for lamination.

The screw shape used in the single screw extruder is not particularly limited provided that it is configured not to accompany excessive shear heat generation, but a full flight screw is more preferable for melt-extrusion without excessive shearing.

The range of the compression ratio of the screw is preferably 1.8 to 3.0 and more preferably 2.1 to 2.7. The compression ratio in the range of 1.8 to 3.0 can inhibit the ECTFE from not being sufficiently plasticized and partially trapped in the screen mesh as an unmolten resin, which facilitates the resin pressure to be increased by clogging up, and it can inhibit the unmolten resin from being mixed into the sheet as a defect, and inhibit the amount of acid gas generated from becoming excessive due to excessive shear heat generation.

The ratio (L/D) of the screw length (L) to the screw (barrel) diameter (D) of the extruder is not particularly limited provided that it is an extruder having sufficient L/D necessary for plasticizing ECTFE, however, it is preferably 20 to 40 and more preferably 25 to 35. The L/D in the range of 20 to 40 can inhibit the resin from not being sufficiently plasticized in the screw region to produce the unmolten resin that is mixed in the sheet as defects, and it can inhibit an increase in the amount of acid gas generated due to excessive shearing.

A breaker plate is provided between the screw tip of the extruder and the T-die. The aperture ratio of the breaker plate is preferably 40 to 60% and more preferably 42 to 58%. Setting the aperture ratio of the breaker plate to 40% or more enables to inhibit the back pressure on the resin and the retention of the resin in the extruder. Moreover, by setting the aperture ratio to 60% or less, the number of defects of the sheet can be stably maintained low for a long period of time.

The aperture ratio is based on the portion exposed to the resin distribution portion of the extruder, and refers to the area of the portion where the resin through hole is formed with respect to the total area including the resin through hole.

The resin through-hole diameter of the breaker plate is preferably 3.7 mm to 7.0 mm. Setting the resin through-hole diameter to 3.7 mm or more enables to inhibit the back pressure on the resin and the retention of the resin in the extruder. Further, by setting the thickness to 7.0 mm or less, the number of defects of the sheet can be stably maintained low for a long period of time.

The screen mesh arranged on the breaker plate is preferably a combination of two or more screen meshes having different openings. The screen mesh may be combined with a screen mesh having the same opening for use. Generally, the screen mesh having a large opening and the screen mesh having a small opening are preferably arranged in this order from the upstream side (the vicinity side of the screen) of the resin distribution portion to the downstream side (breaker plate opening side). Further, a mesh coarser than the mesh is preferably arranged at the downstream of the mesh having the minimum opening for the purpose of preventing the mesh from being torn due to the resin pressure. In the method for producing a sheet of the resin composition of the present embodiment, the minimum opening of the screen mesh is preferably 0.03 mm to 0.2 mm and more preferably 0.03 mm to 0.15 mm. Setting the minimum opening of the screen mesh to 0.03 mm or more enables to inhibit deterioration of the resin due to shear heat generation thereof. Moreover, by setting the minimum opening of the screen mesh to 0.2 mm or less, contamination mixed in the resin, deteriorated starting materials, etc., can be reduced.

The screen mesh having a large opening plays a role of removing coarse defects, and the opening is preferably 0.15 mm to 0.6 mm. Further, in order to prevent the screen mesh from being torn by the resin pressure, a coarse screen mesh having a larger opening may be introduced at the downstream side of the screen mesh having the minimum opening. The screen mesh is preferably placed 10 mm to 100 mm downstream from the tip of the screw.

The flow path of the T-die used for sheet production is not particularly limited in its shape provided that the specifications are such that the resin does not easily stay, but an example of the T-die that can be suitably used includes a coat hanger die. The form of discharge direction of the resin includes a form of ejecting the resin horizontally and a form of ejecting the resin downward in the direction perpendicular to the horizontal direction, and either form can be preferably used.

The temperature setting of the extruder according to sheet production varies depending on the type and fluidity of the ECTFE starting material, but is preferably 220 to 300°C and more preferably 230 to 290°C in the downstream portion of the extruder. When the temperature is in the range of 220 to 300°C, the resin can be sufficiently plasticized, which enables to inhibit the amount of acid gas generated from becoming too high due to excessive heating.

The sheet extruded from the T-die immediately contacts the cooling roll in the vicinity of the die, and is taken up while being cooled, and then cooled. Since ECTFE is a crystalline resin, it is preferably quenched with a cooling roll before the crystallization proceeds from the molten state in order to exhibit excellent transparency. The distance connecting the outlet of the T-die and the point where the sheet comes into contact with the cooling roll at the shortest distance is usually about 200 mm or less, preferably 150 mm or less, and more preferably 100 mm or less. When the distance is 200 mm or less, it is possible to inhibit the crystallization from progressing more than necessary and inhibit the transparency of the sheet from being lowered.

The cooling method by using a cooling roll may be any of a method for providing a gap between two rolls having hard surfaces such as having hard chrome plating, which is suitable for obtaining an arbitrary sheet thickness, and taking up the sheet-shaped molten resin while being in contact between the gap to cool the resin, or a method for crimping the roll with the hard surface and the rubber roll of silicon, etc., and taking up the sheet-shaped molten resin while contacting the resin between the rolls to cool the resin.

The roll material used for producing the sheet from the resin composition of the present embodiment is not particularly limited, but the maximum height (Ry), which is one index of the surface roughness, is preferably 1 s or less and more preferably less than 0.3 s. When Ry exceeds 1 s and the sheet-shaped molten resin is brought into contact with the cooling roll, the uneven shape of the roll is facilitated to be transferred to the sheet surface, and the external haze may be increased.

The temperature of the cooling roll described above is preferably 20°C to 150°C and more preferably 50°C to 120°C. When the temperature is 20°C to 150°C, the roll surface is less likely to condense, the risk of impairing the appearance of the sheet can be reduced, and the peripheral atmospheric temperature is lowered, which enables to inhibit excellent transparency from being less likely to be obtained and inhibit the sheet from sticking to the roll without being sufficiently cooled.

The sheet taken up as described above passes through a guide roll as appropriate without damaging the sheet surface, and then it is slitted to an arbitrary sheet width, and wound up on a paper tube in a sufficiently cooled state. The material of the paper tube is not particularly limited, but a paper tube having a diameter that does not easily produce a winding curl when it is reused after being stored as a roll.

The thickness of the sheet is not particularly limited, but is preferably 0.005 mm to 1.0 mm and more preferably 0.01 mm to 0.5 mm. When the thickness is in the range of 0.005 to 1.0 mm, the sheet is not easily torn and is facilitated to be provided for practical use, and it is possible to prevent the transparency of the sheet from being excessively lowered.

As used herein, the term "sheet" includes what is generally called "film", and therefore a thicker sheet and a thinner film, but "sheet" and "film" are not clearly distinguished therebetween.

The width of the sheet is not particularly limited, but usually the range of 300 mm to 3,000 mm is preferred from the viewpoint of handleability.

The resin sheet mainly composed of the resin composition of the present embodiment preferably exhibits the following physical properties, for example.
- In differential thermal analysis, the amount of heat of crystal melting obtained in the heating process from 23°C to 300°C at a temperature elevation rate of 10°C/min is less than 30 J/g,
- the measured haze value is less than 15% according to JIS K7136, and
- degree of glossiness measured at an incident angle of 60° according to JIS Z8741 is 100 or more.

When the amount of heat of crystal melting is less than 30 J/g, the reduction in transparency accompanied by the increase in crystallinity of the sheet can be inhibited.

The haze value of the sheet measured by a haze meter in accordance with JIS K7136 is preferably 10% or less and more preferably 2% or less. When the haze value is 10% or less, it is possible to inhibit a reduction in design property and a decrease in light collection efficiency in applications requiring high transparency such as membrane structures and front seats for solar cells.

The degree of glossiness at a light incident angle of 60° measured by a gloss meter in accordance with JIS Z8741 is preferably 100 or more and more preferably 120 or more. When the degree of glossiness is 100 or more, it is suitable for applications requiring an excellent design property such as membrane structures.

The sheet obtained by molding the resin composition of the present embodiment as described above contains phosphite antioxidant (B) having no phenolic hydroxy group in the molecule as described above. Phosphite antioxidant (B) includes, for example, tris (2,4-di-tert-butylphenyl)phosphite.

Further, the sheet obtained by molding the resin composition of the present embodiment preferably contains a phenolic antioxidant having a melting point of 100°C or higher and one or three or more structures represented by formula (1). The phenolic antioxidant includes, for example, pentaerythritol tetrakis[3-(3,5-di-tert-butyl-4-hydroxyphenyl)propionate].

The sheet obtained by molding the resin composition of the present embodiment can be suitably used for applications requiring excellent visible light transmission performance and design property. Among them, in particular it can be used for membrane structures that use sheets for a roofing material, etc., as constructions. The sheet can be used as it is as a sheet for a membrane structure, or can be used as a laminate with other base materials. Moreover, it is also possible to bind a portion of the laminated sheets to each other and inflate the sheets by injecting air between the sheets with the portions not being bound to enable to form various shapes.

Here, when the ECTFE resin composition sheet is simply applied to membrane structures, weather resistance that can withstand long-term outdoor exposure is required.

The method for determining the weather resistance performance includes an aging acceleration test by ultraviolet irradiation of for example, while irradiating ultraviolet rays having a wavelength of 300 to 400 nm and an intensity of 150 mW/cm², repeating a cycle consisting of (i) irradiating the ultraviolet rays under the conditions of a temperature of 63°C and a relative humidity of 50% RH for 10 hours, (ii) showering for 20 seconds, and (iii) standing for 2 hours in the dark for 996 hours. The test method is not limited thereto, but is preferably a test that reflects long-term outdoor use.

As the weather resistance performance of the resin composition sheet of the present embodiment, the haze change after the aforementioned aging acceleration test by ultraviolet irradiation, is preferably 10% or less and more preferably 2% or less.

Further, the sheet obtained by molding the resin composition of the present embodiment has b∗ in the L∗a∗b∗ color system measured by a color difference meter for the sheet after the aging acceleration test by ultraviolet irradiation, which is preferably 5.0 or less and more preferably 2.0 or less. When b∗ is 5.0 or less, the yellowness of the sheet itself is not easily recognized macroscopically, and deterioration of the design property when used as a membrane structure sheet can be minimized.

Furthermore, the reducing effect on acid gas generation exhibited when the sheet obtained by molding the resin composition of the present embodiment is produced at an elevated temperature such as extrusion molding, can be confirmed with an apparatus for measuring the acid gas concentration at an arbitrary place. The apparatus is not particularly limited provide that it has sufficient quantification accuracy. An example of a measuring apparatus that can be used includes an acid gas concentration detector in which a glass tube is filled with an acid gas absorber to quantitatively recover the gas and obtain the gas concentration thereof.

Specifically, the acid gas concentration is measured as the accumulated acid gas concentration at a position 100 mm away in a straight line from the lip of the T die used in the method for producing a sheet from the resin composition of the present embodiment described above. The acid gas concentration is preferably less than 30 ppm and more preferably less than 20 ppm. When the gas concentration is less than 30 ppm, it is possible to inhibit corrosion of the steel materials of the surrounding equipment, including the die, and to provide stable production for a long period of time.

### <Membrane structure, construction, and adhesive molded product>

The sheet obtained by molding the resin composition of the present embodiment and the molded product obtained by secondary processing of the sheet can achieve high transparency, they are excellent in design property and can be suitably used for membrane structures and constructions.

The structures include constructions by using the molded products, for example, a pool, an athletic, a soccer stadium, a baseball stadium, a gymnasium, a highway, a sidewalk, a carport, a bus terminal, a bus and taxi stand, an airport, a station, a warehouse, a venue, an exhibition hall, commercial facilities, tourist facilities, aquaculture facilities, horticultural facilities, and agricultural houses.

Moreover, the membrane structures include such that the aforementioned sheets (molded products) are used for partial sites such as outer walls of the aforementioned constructions, automobiles, ships, etc., and bodies, roofs, windows, etc. Further, an adhesive molded product to which glues or adhesives are applied to a molded product obtained by molding the ECTFE resin composition of the present embodiment as a base material, a so-called tape, can be suitably used as a repair tape for membrane structures.

Here, "secondary processing" refers to carrying out processing such as hot plate welding, ultrasonic·highfrequency welder welding, laser welding, hot air welding, laminating, cutting·slitting, press molding, and vacuum molding within a range that does not impair transparency, color tone, glossiness, heat resistance, weather resistance, resistance to yellowing, sheet appearance, etc.

The sheet obtained by molding the resin composition of the present embodiment may be subjected to printing, etc., within a range that does not practically impair transparency, color tone, glossiness, heat resistance, weather resistance, resistance to yellowing, sheet appearance, etc. The printing method includes a method for carrying out printing on the surface of the sheet of the ECTFE resin composition which has been preliminarily subjected to corona treatment and plasma treatment by selecting a printing method suitable for the purpose and application, such as gravure printing, flexographic printing, offset printing, inkjet printing, etc. Being subjected to the printing can impart aesthetics, etc., to the sheet and the membrane structure.

### Examples

The present invention will be described in more detail with reference to the following Examples, but the present invention is not limited to these Examples.

### <Starting materials>

The starting materials used in the present Examples and Comparative Examples are described below.
- Ethylene-chlorotrifluoroethylene copolymer (ECTFE) "Halar ECTFE 700HC" manufactured by Solvay S.A.

Melting point 202°C, MFR 9.0 g/10 min
(ASTM D1238 275°C/2.16 kg load)

### (Antioxidant)

The phosphite antioxidant and the phenolic antioxidant that are commercially available products and shown in Table 1 below, were used.

**[Table 1]**

| Antioxidant | Product name | Substance name | Presence or absence of phenol group in phosphite antioxidant |
|---|---|---|---|
| Phosphite | ADK STAB 2112 manufactured by ADEKA CORPORATION | tris(2,4-di-tert-butylphenyl)phosphite | Absence |
| | ADK STAB HP-10 manufactured by ADEKA CORPORATION | 2,4,8,10-tetrakis(1,1-dimethylethyl)-6-[(2-ethylhexyl)oxy]-12H-dibenzo[d,g][1,3,2]dioxaphosphocin | Absence |
| | ADK STAB PEP-8 manufactured by ADEKA CORPORATION | 3,9-bis(octadecyloxy)-2,4,8,10-tetraoxa-3,9-diphosphaspiro[5,5]undecane | Absence |
| | Sumilizer GP manufactured by Sumitomo Chemical Co., Ltd. | 2-(tert-butyl)-6-methyl-4-{3-[(2,4,8,10-tetra-tert-butyldibenzo[d,f][1,3,2]dioxaphosphepin-6-yl)oxy]propyl}phenol | Presence |
| Phenolic | Irganox 1010 manufactured by BASF SE | Pentaerythritol tetrakis[3-(3,5-di-tert-butyl-4-hydroxyphenyl)propionate] | - |
| | Irganox 1076 manufactured by BASF SE | Stearyl 3-(3,5-di-tert-butyl-4-hydroxyphenyl) propionate | - |
| | Sumilizer GA-80 manufactured by Sumitomo Chemical Co., Ltd. | 3,9-bis[1,1-dimethyl-2-[(3-tert-butyl-4-hydroxy-5-methylphenyl)propionyloxy]ethyl]-2,4,8,10-tetraoxaspiro[5.5]undecane | - |
| | ADK STAB AO-60 manufactured by ADEKA CORPORATION | Pentaerythritol tetrakis[3-(3,5-di-tert-butyl-4'-hydroxyphenyl)propionate] | - |
| | ADK STAB AO-330 manufactured by ADEKA CORPORATION | 2,4,6-tris(3',5'-di-tert-butyl-4'-hydroxybenzyl)mesitylene | - |

The structural formulae of the phosphite antioxidants in the table are shown below.

tris(2,4-di-tert-butylphenyl)phosphite 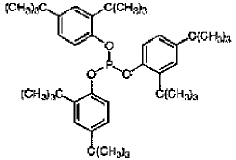 3,9-bis(octadecyloxy)-2,4,8,10-tetraoxa-3,9-diphosphaspiro[5,5]undecane 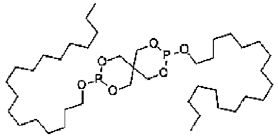 2,4,8,10-tetrakis(1,1-dimethylethyl)-6-[(2-ethylhexyl)oxy]-12H-dibenzo[d,g][1,3,2]dioxaphosphocin 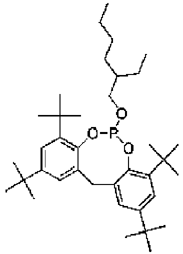 2-tert-butyl-6-methyl-4-{3-[(2,4,8,10-tetra-tert-butyldibenzo[d,f][1,3,2]dioxaphosphepin-6-yl)oxy)propyl}phenol

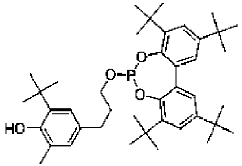

### <Example 1>

0.4 parts by mass of "ADEKA STAB 2112" (phosphite antioxidant) manufactured by ADEKA CORPORATION was premixed with respect to 100 parts by mass of ECTFE, and then the mixture was melt-mixed by using "Labo Plastmill Micro" manufactured by Toyo Seiki Seisaku-sho, Ltd. at 250°C to obtain a molten resin sheet having a thickness of 0.25 mm.

### <Examples 2 to 9 and Comparative Examples 1 to 7>

According to the method of Example 1, sheets of each Comparative Example and each Example were fabricated based on the amounts of starting materials added shown in Tables 3 to 5.

### <Sheet evaluation>

According to the following, the "transparency" and "degree of yellowing" of the resin sheet before and after the weather resistance test were evaluated. The sheet evaluations (transparency and degree of yellowing) before and after the weather resistance test are shown in Tables 2 to 5 below.

### (Evaluation of transparency)

The transparency of the resin sheet was evaluated according to the criteria shown in Table 2 below by measuring the haze value of the resin sheet. Specifically, the haze value was measured by using a haze meter "NDH7000" manufactured by Nippon Denshoku Kogyo Co., Ltd. in accordance with JIS K7136. Then, based on the measured haze values, the transparency of the sheet was determined according to the criteria shown in Table 2. To measure the haze value, samples cut out from arbitrary 5 points of the resin sheet were used, and the arithmetic mean value of the samples was adopted. The transparency was evaluated for each of the resin sheets before the weather resistance test described below and the resin sheets after the weather resistance test.

A lower transparency (a higher haze value) of the resin sheet after the weather resistance test than that of the resin sheet before the weather resistance test means that the sheet has clouded and produced "whitening".

### (Evaluation of degree of yellowing)

Evaluation of the degree of yellowing of the resin sheet was carried out by using a color difference meter "ZE6000" manufactured by Nippon Denshoku Kogyo Co., Ltd., and the b∗ in the L∗a∗b∗ color system was measured by the transmission method. Based on the measured b∗ values, the degree of yellowing of the resin sheet after the weather resistance test was determined according to the criteria shown in Table 2 below. The degree of yellowing was evaluated for each of the resin sheets before the weather resistance test described below and the resin sheets after the weather resistance test.

A worse degree of yellowing (higher b∗) of the resin sheet after the weather resistance test than that of the resin sheet before the weather resistance test means that the sheet has produced "yellowing".

### (Weather resistance test)

For the weather resistance test of the resin sheet, a super-accelerated weather resistance tester ("Eye Super UV Tester SUV-W161" manufactured by Iwasaki Electric Co., Ltd.) was used. In the measurement, while irradiating ultraviolet rays having a wavelength of 300 to 400 nm and an intensity of 150 mW/cm², the cycle consisting of (i) irradiating the ultraviolet rays for 10 hours under the conditions of temperature 63°C and relative humidity 50% RH, (ii) showering the resin sheet for 20 seconds, and (iii) standing for 2 hours in the dark was repeated for 996 hours.

**[Table 2]**

| | | Good | Fair | Unacceptable |
|---|---|---|---|---|
| Transparency | HAZE (%) | 2 or less | More than 2 and 10 or less | More than 10 |
| Yellowing | b* | 2 or less | More than 2 and 5 or less | More than 5 |

**[Table 3]**

| | | Example 1 | Example 2 | Example 3 |
|---|---|---|---|---|
| Phosphorus antioxidant | Compound | 2112 manufactured by ADEKA CORPORATION 0.4 | HP-10 manufactured by ADEKA CORPORATION | PEP-8 manufactured by ADEKA CORPORATION |
| | Addition amount (part by mass) | | 0.4 | 0.4 |
| Phenolic antioxidant | Compound | - | - | - |
| | Addition amount (part by mass) | | | |
| Sheet evaluation | HAZE(%) | 1.7 Good | 2.8 | 2.2 |
| | Determination | | Fair | Fair |
| | b* | 1.5 Good | 1.2 | 1.4 |
| | Determination | | Good | Good |
| Weather resistance evaluation | HAZE(%) | 2 Good 1.7 Good | 3.1 | 2.6 |
| | Determination | | Fair | Fair |
| | b* | | 1.7 | 1.3 |
| | Determination | | Good | Good |

**[Table 4]**

| | | Example 4 | Example 5 | Example 6 | Example 7 | Example 8 | Example 9 |
|---|---|---|---|---|---|---|---|
| Phosphorus antioxidant | Compound | 2112 manufactured by ADEKA CORPORATION | 2112 manufactured by ADEKA CORPORATION | 2112 manufactured by ADEKA CORPORATION | 2112 manufactured by ADEKA CORPORATION | 2112 manufactured by ADEKA CORPORATION | 2112 manufactured by ADEKA CORPORATION |
| | Addition amount (part by mass) | 0.1 | 0.2 | 0.3 | 0.1 | 0.2 | 0.3 |
| Phenolic antioxidant | Compound | Irganox 1010 manufactured by BASF SE | Irganox 1010 manufactured by BASF SE | Irganox 1010 manufactured by BASF SE | Irganox 1076 manufactured by BASF SE | Irganox 1076 manufactured by BASF SE | Irganox 1076 manufactured by BASF SE |
| | Addition amount (part by mass) | 0.1 | 0.1 | 0.1 | 0.1 | 0.1 | 0.1 |
| Sheet evaluation | HAZE(%) | 1.5 | 1.4 | 1.6 | 1.4 | 1.7 | 1.3 |
| | Determination | Good | Good | Good | Good | Good | Good |
| | b* | 1.5 | 1.9 | 1.7 | 1.6 | 1.5 | 1.5 |
| | Determination | Good | Good | Good | Good | Good | Good |
| Weather resistance evaluation | HAZE(%) | 2 | 2.4 | 2.4 | 2.3 | 1.8 | 2.1 |
| | Determination | Good | Fair | Fair | Fair | Good | Fair |
| | b* | 1.6 | 1.9 | 2 | 1.8 | 1.7 | 1.7 |
| | Determination | Good | Good | Good | Good | Good | Good |

**[Table 5]**

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Phosphorus antioxidant | Compound | Sumilizer GP manufactured by Sumitomo Chemical Co., Ltd. | - | - | - | - | - | - |
| | Addition amount (part by mass) | 0.4 | - | - | - | - | - | - |
| Phenolic antioxidant | Compound | - | Sumilizer GA-80 manufactured by Sumitomo Chemical Co., Ltd. | Irganox 1010 manufactured by BASF SE | Irganox 1076 manufactured by BASF SE | ADK STAB AO-60 manufactured by ADEKA CORPORATION | ADK STAB AO-330 manufactured by ADEKA CORPORATION | |
| | Addition amount (part by mass) | - | 0.4 | 0.4 | 0.4 | 0.4 | 0.4 | - |
| Sheet evaluation | HAZE(%) | 1.5 | 2 | 1.3 | 1.5 | 1.2 | 1.5 | 1.4 |
| | Determination | Good | Good | Good | Good | Good | Good | Good |
| | b* | 1.6 | 1.6 | 1.3 | 1.8 | 1.5 | 1.6 | 1.1 |
| | Determination | Good | Good | Good | Good | Good | Good | Good |
| Weather resistance evaluation | HAZE(%) | 3 | 42 | 48 | 56 | 48 | 66 | 98 |
| | Determination | Good | Unacceptable | Unacceptable | Unacceptable | Unacceptable | Unacceptable | Unacceptable |
| | b* | 8.3 | 3 | 9 | 9 | 3 | 6.4 | 5.4 |
| | Determination | Unacceptable | Fair | Unacceptable | Unacceptable | Fair | Unacceptable | Unacceptable |

From the results of Examples 1 to 3, by adding the phosphite antioxidant having no phenolic hydroxy group to ECTFE, excellent transparency and inhibition effect on yellowing (b∗) in the weather resistance evaluation were observed for the resin sheet formed by using the antioxidant.

Moreover, from the results of Examples 4 to 9 each, by adding the phenolic antioxidant in addition to the phosphite antioxidant, the resin sheet formed by using them exhibited excellent transparency and the inhibition effect on whitening and yellowing in the weather resistance evaluation.

From the results of Comparative Example 1, the single addition of the phosphite antioxidant having a phenolic hydroxy group in the molecule was found to demonstrate the inhibition effect on whitening in the weather resistance evaluation, but not to sufficiently exhibit the inhibition effect on yellowing.

Further, in Comparative Examples 2 to 6, when the phenolic antioxidant was singly added to ECTFE, it was found not to enable to sufficiently inhibit whitening and yellowing. In Comparative Example 7, it was found that no addition of the antioxidant caused whitening and yellowing, and could not maintain transparency.

As described above, the resin sheet from the resin composition of the present invention exhibited excellent transparency, maintained excellent transparency even after the weather resistance test, and inhibited yellowing. From these results, the resin sheet (molded product) from the resin composition of the present invention can be suitably used for membrane structures, building application, or adhesive molded products, which are exposed to the outdoors for a long period of time.

The disclosure of Japanese Patent Laid-Open No. 2019-067611 filed on March 29 in 2019, has been incorporated herein by reference in its entirety.

Further, all literatures, patent applications, and technical standards described in the description are incorporated by reference herein to the same extent as if the individual literatures, patent applications, and technical standards were specifically and individually stated to be incorporated by reference.

## Claims

1. A resin composition comprising an ethylene-chlorotrifluoroethylene copolymer (A) and a phosphite antioxidant (B) having no phenolic hydroxy group in the molecule.

2. The resin composition according to claim 1, wherein the phosphite antioxidant (B) is at least one selected from tris(2,4-di-tert-butylphenyl)phosphite, 3,9-bis(octadecyloxy)-2,4,8,10-tetraoxa-3,9-diphosphaspiro[5,5]undecane, and 2,4,8,10-tetrakis(1,1-dimethylethyl)-6-[(2-ethylhexyl)oxy]-12H-dibenzo[d,g][1,3,2]dioxaphosphocin.

3. The resin composition according to claim 1 or 2, further comprising another phosphite antioxidant (B') having a phenolic hydroxy group in the molecule, wherein
a content of the phosphite antioxidant (B) is 60 parts by mass or more with respect to 100 parts by mass of a total amount of the phosphite antioxidants in the composition.

4. The resin composition according to any one of claims 1 to 3, further comprising a phenolic antioxidant (C) having one or three or more structures represented by the following formula (1) in the molecule, 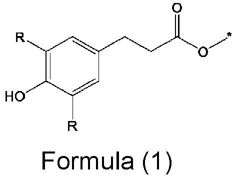 wherein R represents a hydrogen atom or an alkyl group having 1 to 4 carbon atoms, and * represents a bonding site.

5. The resin composition according to claim 4, wherein the phenolic antioxidant (C) is at least one selected from pentaerythritol tetrakis[3-(3,5-di-tert-butyl-4-hydroxyphenyl)propionate], stearyl 3-(3,5-di-tert-butyl-4-hydroxyphenyl) propionate, and 1,6-hexanediol bis[3-(3,5-di-tert-butyl-4-hydroxyphenyl)propionate].

6. The resin composition according to any one of claims 1 to 5, wherein a content of the phosphite antioxidant (B) is 25 to 100 parts by mass with respect to 100 parts by mass of a total amount of the antioxidants in the composition.

7. A molded product obtained by molding the resin composition according to any one of claims 1 to 6.

8. The molded product according to claim 7, wherein the molded product is in a form of a sheet or a film.

9. The molded product according to claim 7 or 8, wherein secondary processing is applied to the molded product.

10. A membrane structure made by using the molded product according to any one of claims 7 to 9.

11. A construction made by using the molded product according to any one of claims 7 to 9.

12. An adhesive molded product made by using the molded product according to any one of claims 7 to 9 as a base material.
